# EUROPÄISCHE PATENTSCHRIFT

(11) **EP 2 136 732 B1**
(45) Veröffentlichungstag und Bekanntmachung des Hinweises auf die Patenterteilung: **26.10.2011**
(21) Anmeldenummer: 08734598.9
(22) Anmeldetag: 11.03.2008
(51) Int. Cl.: A61C 9/00

(54) **INJEKTIONSKORREKTURABFORMLÖFFEL ZUR DIREKT-, ABZWEIG- UND REIHENBEFÜLLUNG MIT KORREKTURABFORMMASSE**
INJECTION CORRECTION IMPRESSION TRAY FOR DIRECT, TAP AND SERIAL FILLING WITH CORRECTION IMPRESSION MATERIAL
CUILLÈRE DE MOULAGE À CORRECTION D'INJECTION, SERVANT AU REMPLISSAGE DIRECT, EN DÉRIVATION ET EN SÉRIE, D'UN PRODUIT DE MOULAGE DE CORRECTION

(30) Priorität: 13.03.2007 DE 102007012540
(43) Veröffentlichungstag der Anmeldung: 30.12.2009
(73) Patentinhaber: Neuschäfer, Gerd, 36251 Bad Hersfeld (DE)
(72) Erfinder: Neuschäfer, Gerd, 36251 Bad Hersfeld (DE)
(86) Internationale Anmeldenummer: PCT/EP2008/001922
(87) Internationale Veröffentlichungsnummer: WO 2008/110340

(56) Entgegenhaltungen:
- EP-A- 1 759 659
- WO-A-2005/102205
- DE-A1- 10 153 245
- DE-C1- 4 304 421
- DE-U1- 9 313 561
- US-A- 4 227 877
- US-A- 5 076 785
- US-A- 5 890 895

## Beschreibung

Nach einer Zahnpräparation wird zur Modellherstellung eine Abformung des die präparierten Zähne enthaltenden Kiefers durchgeführt. Eine häufig angewendete Abformtechnik ist die Korrekturabformung. Hierbei wird ein Erstabdruck mit hochvisköser Abformmasse genommen. Anschließend wird diese Abformung raumschaffend beschnitten, mit einer niedrigviskösen Abformmasse befüllt und wieder in die gleiche Position intraoral zurückgesetzt, wobei auch die dem hochviskösen Erstabformaterial nicht gut zugänglichen Bereiche korrigierend abgeformt werden. Dabei kann es durch Einschlüsse von Speichel, Blut, Luft, durch Verwirbelungen der Abformmasse und auch anatomischen Behinderungen (Zunge, Wangenbänder u.a.) zu Fehlabformungen und Qualitätseinbußen kommen, die eine Neuabformung erfordern, oder eine insuffiziente Prothetik zur Folge haben. Dies ist zeit-, arbeits-, stress- und kostenintensiv.

Zur Minimierung der o.g. Probleme existieren Abformverfahren und Vorrichtungen mit denen Korrekturabformmasse in einen intraoral aufgesetzten Abformlöffel appliziert werden kann. Dabei werden Blut, Speichel und Luft von der Korrekturabformmasse aus dem Erstabdruck verdrängt. Auch werden Verwirbelungen und Kavernenbildungen durch dosiertes Nachpressen vermieden.

Bei dem in der DE 100 20 894 A1 beschriebenen Verfahren befinden sich die Injektionskanäle an den Seitenwandungen im Inneren des Abformlöffels. Injektions-, bzw. Abflusskanäle werden über vorgegebene Öffnungen in den Löffelwandungen im Abformmaterial ausgestanzt.

Bei dem in der DE 195 26 017 C1 beschriebenen Verfahren wird das Korrekturabformmaterial über verschließbare Einspritzdüsen zugeführt und der Überschuß über verschließbare Abflussdüsen ausgeleitet. Die Düsen sind auch hier an fixer Position in den Wandungen des Abformlöffel angeordnet.

In der DE 201 04 943 U1 wird ein Injektionskanal für die Korrekturabformmasse mit einem aus der Erstabformmasse herausnehmbaren Platzlialterschlauch angelegt. Der Kanal befindet sich in der Erstabformmasse im Inneren des Löffelkorpus, wodurch die Zugänglichkeit und damit eine gesteuerte und gerichtete Applikation der Korrekturabformmasse nur bedingt möglich ist.

Die DE10 2005 042 013 beschreibt eine Vorrichtung zur Injektionskorrekturabformung bestehend aus einem Injektionskorrekturabformlöffel mit einem Korpus, Korpuswandungen, einem Griff, einem Versteifungsrahmen, Ventilrandformen, Halteund Stützvorrichtungen und einer Bodenaussparung. Eine Wendebodenplatte ist reversibel mit dem Korpus zusammenfügbar. Sie verschließt dabei die Bodenaussparung des Korpus. Die Wendebodenplatte weist einen Griff sowie Halteund Stützvorrichtungen auf. Die Wendebodenplatte weist ferner auf einer Seite eine Profilierung auf, welche bei der Verwendung der Vorrichtung eine Injektionsrinne in einer Erstabformmasse ausformt. Vor der Applikation der Korrekturabformmasse wird die Wendebodenplatte um 180° gewendet, so dass die Profilierung außen zu liegen kommt. Die innen liegende plane Seite der Wendebodenplatte deckt dabei die Injektionsrinne ab und bildet so einen geschlossenen Kanal.

Bei der Erfindung handelt es sich um einen Injektionskorrektuabformlöffel der sich aus dem Korpus und der Profilbodenplatte zusammensetzt, und in Form und Handhabung einem gebräuchlichen Ober- bzw. Unterkieferabformlöffel ähnelt.

Der Korpus weist auf:
1- eine Bodenaussparung
2- eine Versteifungsrahmung
3- Halte- und Stürzvorrichtungen
4- Ventilrandformer
5- Einsinktiefenbegrenzer
6- Einsinktiefenbegrenzerlager
7- einen Griff
8- Trennhilfestrukturen

zu 1 Die Bodenaussparung befindet sich im Boden des Korpus. Sie weist einen ausreichenden Abstand zum Bodenrand auf, um die Verwindungsstabilität des Korpus zu gewährleisten.

zu 2 Die Versteifungsrahmung erhöht die Verwindungssteifheit des Korpus. Sie ist entsprechend dimensioniert und geformt und an geeigneter Position mit dem Korpus verbunden. Die Verwindungssteifheit kann auch durch Falzungen und steitheitsverstärkende Ausformungen des Korpus erhöht werden.

zu 3 Halte- und Stützvorrichtungen sind an geeigneter Position am Korpus bzw. Korpusgriff angebracht. Sie dienen der reversiblen Verbindung von Korpus und Profilbodenplatte.

Zu 4 Die Ventilrandformer befinden sich an den Rändern der Korpuswandungen. Sie sind entsprechend geformt, um einen Ventilrand mit der Erstabformmasse zu gestalten.

Zu 5 Die Einsinktiefenbegrenzer limitieren während der Erstabformung die Einsinktiefe der Zähne in die Erstabformmasse und gewährleisten damit eine ausreichende Schichtstärke von Erstabformmasse zwischen Bezahnung und Profilbodenplatte. Es werden reversibel lösbare und/oder fixe Einsinktiefenbegrenzer verwendet. Fixe Einsinktiefenbegrenzer sind mit den Korpuswandungen und /oder der Versteifungsrahmung stabil verbunden, oder sind Teil der Korpuswandungen. Die mobilen Einsinktiefenbegrenzer bestehen bevorzugt aus Splinten, Stifte o.ä., die in für sie gestaltete Lager in den Korpuswandungen eingelagert werden. Sie werden entfernt oder versetzt, falls sie die Gestaltung der Fließwege der Korrekturabformmasse in der Erstabformmasse behindern.

Zu 6 Als Einsinktiefenbegrenzerlager dienen bevorzugt Einschnitte und/oder Einkerbungen und/oder Bohrungen in den Korpuswandungen, bzw. Versteifungsrahmungen, die in ihrer Dimension auf die Querschnitte der Einsinktiefenbegrenzer abgestimmt sind.
Im zusammengefügten Funktionszustand des Injektionskorrekturabformlöffels stabilisiert die Profilbodenplatte die eingelagerten, mobilen Einsinktiefenbegrenzer gegen Lageveränderung.

Zu 7 Der Korpusgriff ist mit der mesialen Außenwandung des Korpus verbunden. Er ist nach anatomischen und ergonomischen Erfordernissen funktionell gestaltet und an den Griff der Profilbodenplatte adaptierbar.

Zu 8 Die Trennhilfestrukturen dienen zur leichteren Trennung der Profilbodenplatte vom Korpus.

Die Profilbodenplatte weist auf:
1- einen Griff
2- Halte- und Stüizvorrichtungen
3- Dichtwülste/Dichtkerben
4- Retentionsstrukturen
5- Seitenwandungen
6- A) mindestens eine Injektionsrinne, mit mindestens einem zugehörigen Injektionsrinneneinlaß und mindestens einen zugehörigen Injektionsrinnenauslaß.
   Oder
   B) mindestens eine Injektionsrinne mit mindestens einem zugehörigen Injektionsrinneneinlaß und mindestens einen Injektionsrinnenauslaß und mindestens eine Ablaufrinne, mit mindestens einem Ablaufrinnenauslaß.
   Oder
   C) mindestens eine Injektionsrinne, mit mindestens einem zugehörigen Injektionsrinneneinlaß und mindestens eine Ablaufrinne, mit mindestens einem Ablaufrinnenauslaß.
7- Einlassadapter
8- Auslassadapter
9- Trennhilfestrukturen
10- Verschlußstopfen

Zu 1 Der Griff der Profilbodenplatte befindet sich im mesialen Bereich und ist so ausgeformt, dass er sich im zusammengefügten Zustand an den Griff des Korpus adaptieren kann. Er weist Trennhilfestrukturen zum leichteren Trennen von Profilbodenplatte und Korpus auf.

Zu 2 Die Profilbodenplatte weist an geeigneter Position Halte- und Stützvorrichtungen auf, über die Profilbodenplatte und Korpus reversibel miteinander verbindbar sind.

Zu 3 Auf der rinnenseitigen Fläche der Profilbodenplatte befinden sich an geeigneter Position und mit geeigneter Verlaufsrichtung Dichtwülste bzw. Dichtkerben. Sie formen in der Erstabformmasse Wülste bzw. Kerben, die die Abdichtung des Injektionsrinnenkanals bzw. Ablaufrinnenkanals gegen Abfließen der Korrekturabformmasse während der Korrekturabformung verbessern.

Zu 4 Auf der Rückenfläche der Profilbodenplatte befinden sich an geeigneter Position Retentionsstrukturen. Sie werden mit hochvisköser Formmasse (z.B.Erstabformmasse) beschickt, in die sich die Zähne des Gegenkiefers während der Erstabformung einbetten. In diese dadurch entstandenen Impressionen sollen sich die Gegenkieferzähne während der späteren Korrekturabformung wieder einlagern und den Abformlöffel durch dosierten Bissdruck in ortsstabiler Position fixieren.

Zu 5 Durch Ausformung seitlicher Wandungen, oder Anbringung eigenständiger, reversibel fixierbarer Wandungen an der Profilbodenplatte erhält diese eine, einem Abformlöffel ähnelnde, zur Aufnahme von Abformmasse geeignete Form

Zu 6 In der im zusammengefügten Funktionszustand des Injektionskorrekturabformlöffels zum Korpusinnenraum weisenden Fläche der Profilbodenplatte, befindet sich mindestens eine über beide Schenkel verlaufende, durchgängige Injektionsrinne. Sie weist mindestens einen Injektionsrinneneinlaß bevorzugt im mesialen Bereich der Profilbodenplatte auf. Mindestens ein Injektionsrinnenauslaß befindet sich bevorzugt an jedem distalen Ende der Injektionsrinne. Möglich sind auch Ausführungen der Profilbodenplatte, die mehrere Injektionsrinnen, wie z.B. eine Injektionsrinne je Schenkel, oder noch zusätzlich zu diesen, eine Injektionsrinne im Frontzahnbereich aufweisen. Auch diese Rinnen verfügen über mindestens einen Injektionsrinneneinlaß und mindestens einen Injektionsrinnenauslaß an geeigneter Position.

Zusätzlich zur Injektionsrinne (bzw. Injektionsrinnen) befindet sich mindestens eine Ablaufrinne in der Profilbodenplatte. Sie verläuft bevorzugt annähernd parallel zur Injektionsrinne (bzw. Injektionsrinnen) und weist mindestens einen Ablaufrinnenauslaß auf, der sich bevorzugt im mesialen Bereich der Profilbodenplatte befindet.

Zu 7 Zur leichteren Applikation der Korrekturabformmasse und zum optimalen Anschluß des Applikators weist der Injektionsrinneneinlaß eine geeignete Form und einen Einlassadapter auf. Dieser kann integrierter Bestandteil der Profilbodenplatte, oder als eigenständige Vorrichtung mit dem Injektionsrinneneinlaß reversibel verbindbar sein.

Zu 8 Zum Anschluß eines Unterdruckerzeugers (z.B. Sauganlage), weist der Ablaufiinnenauslaß eine geeignete Form und einen Auslaßadapter auf. Dieser kann integrierter Bestandteil der Profilbodenplatte oder als eigenständige Vorrichtung mit dem Ablaufrinnenauslaß reversibel verbindbar sein. Der Anschluß der Sauganlage an den Ablaufrinnenauslaß des intraoral aufgesetzten, zur Direkt- oder Reihenapplikation mit Korrekturabformmasse vorbereiteten Injektionskorrekturabformlöffels hat zur Aufgabe:
a) die Trocknung der Fließwege und des Präparationsraumes. Die angesaugte Luft strömt in die Injektionsöffnung und durch die für die Korrekturabformmasse angelegten Fließwege und durch die Präparationsräume zur Auslassöffnung. Dabei wird vorhandene Feuchtigkeit aufgenommen und abtransportiert.
b) die Erzeugung eines Unterdrucks im Präparationsraum und im Fließwegsystem. Durch Verschluß des Injektionsrinneneinlasses mit den Applikator entsteht im Fließwegsystem und im Präparationsraum ein Unterdruck, durch den die Fließ- und Abformeigenschaften der Korrekturabformmasse verbessert werden.

Zu 9 Die Trennhilfestrukturen dienen zur leichteren Trennung von Profilbodenplatte und Korpus.

Zu 10 Die Einlaß- und Auslassöffnungen bzw. Einlaß- und Auslassadapter sind durch Verschlussstopfen reversibel verschließbar. Die Verschlussstopfen können als Einzelstopfen je zugehöriger Öffnung, oder als Stopfenverbund für mehrere, oder alle Öffnungen gestaltet sein. Ihre Eindringtiefe in die Profilbodenplatte ist bis zur zugehörigen Injektionsrinne bzw. Ablaufrinne begrenzt. Ihre Aufgabe ist das Eindringen von Erstabformmasse in die Injektionsöffnungen bzw. Auslassöffnungen zu verhindern, die in diesen aushärten und durch ihre Retentionen das Trennen der Profilbodenplatte vom Korpus erschweren würden.

Die Profilbodenplatte und der Korpus sind so ausgerichtet, geformt und dimensioniert, dass sie reversibel zusammenfügbar sind und in diesem Zustand die Bodenaussparung des Korpus von der Profilbodenplatte verschlossen ist. Dabei weist die mit dem Injektions- und Ablaufrinnen versehene Fläche der Profilbodenplatte in den Korpusinnenraum.
Bei ungenügender Dicke der Profilbodenplatte können die Rinnenwandungen sich durch die Rückenfläche der Profilbodenplatte wölben.

Die Rinnenquerschnitte sind bevorzugt Halbrund, U-, oder V-förmig ausgelegt und entsprechend der Viskosität der Korrekturabformmasse dimensioniert. Auch kann wegen der Injektionsdruckregulierung und der Fließ- und Strömungseigenschaften des Korrekturabformmaterials die Querschnittsfläche der Rinnen variieren.

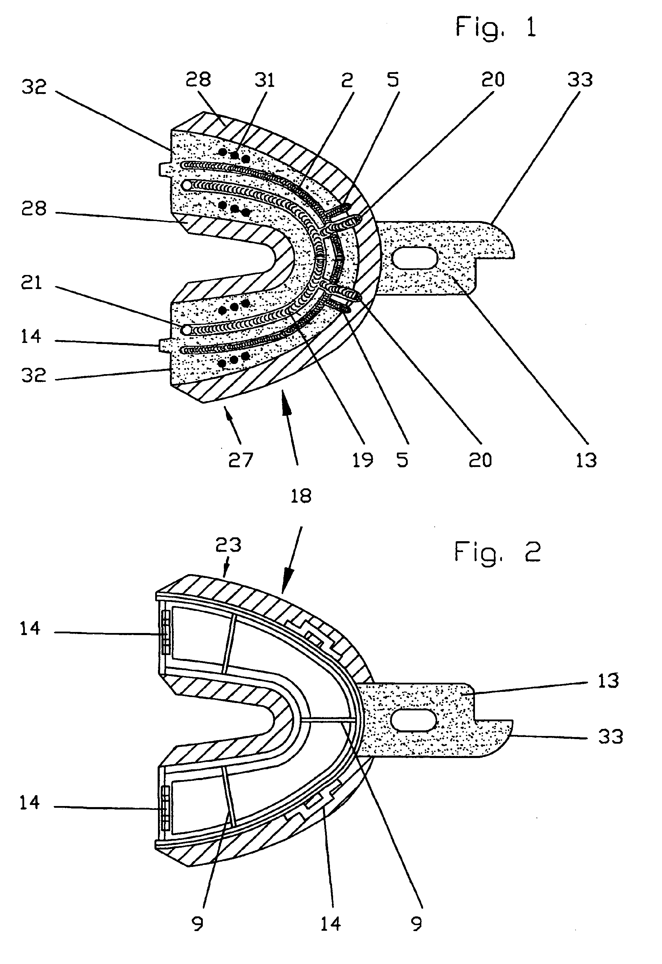

Fig. 1 zeigt in Draufsicht die Rückenfläche der Profilbodenplatte (27) mit Seitenwandungen (28), mit einer durchgängigen Injektionsrinne (19) mit zwei Injektionsrinneneinlässen (20) und je Schenkel einen distalen Injektionsrinnenauslaß (21) und eine durchgängige Ablaufrinne (2) mit zwei mesialen Ablaufrinnenauslässen (5). Die Rinnen durchwölben den Profilbodenplattenrücken.
Fig. 2 zeigt in Draufsicht die Rückenseite des Korpus (23).
Fig. 3 zeigt schematisch einen Schenkellängsschnitt während der Abzweigbefüllung für den Zahn- stumpf 46 und die Direktbefüllung für den Zahnstumpf 48. Die Pfeile zeigen Fließweg (12) und Fließrichtung der Korrekturabformmasse (25) an. Der Injektionskorrekturabformlöffel (18) ist auf dem Unterkiefer aufgesetzt.
Fig. 4 zeigt schematisch einen Schenkellängsschnitt während der Reihenbefüllung für die Zahnstümpfe der Pfeilerzähne 34 und 36. Die Pfeile zeigen Fließweg und Fließrichtung der Korrektwabformmasse (25) an. Der Injektionskorrekturabformlöffel (18) ist auf dem Unterkiefer aufgesetzt.
Fig. 5 zeigt Schnitt I der Fig. 3 als schematischen Querschnitt durch den Schenkel (32) des Injektionskorrekturabformlöffels (18) in Position des Zahnstumpfes 48. Die Profilbodenplatte (27) weist Seitenwandungen (28) auf. Der Injektionskorrekturabformlöffel (18) befindet sich extraoral.
Fig. 6 zeigt Schnitt II der Fig. 3 als schematischen Querschnitt durch den Schenkel (32) des Injektionskorrekturabformlöffels (18) in Position des Zahnstumpfes 46. Die Profilbodenplatte (27) weist Seitenwandungen (28) auf. Der Injektionskorrekturabformlöffel (18) befindet sich extraoral.
Fig. 7 zeigt Schnitt III der Fig. 4 als schematischen Querschnitt durch den Schenkel des Korrekturabformlöffels in Position des Pfeilerzahnstumpfes 36, mit Anschnitt eines Entlüftungskanals (11). Der Injektionskorrekturabformlöffel (18) befindet sich extraoral.
Fig. 8 zeigt Schnitt IV der Fig. 4 in Position des Zahnes 37 mit Anschnitt eines Verbindungskanals (34) zwischen Injektionsrinnenkanal (17) und Ablaufrinnenkanal (4). Der Injektionskorrekturabformlöffel (18) befindet sich extraoral.

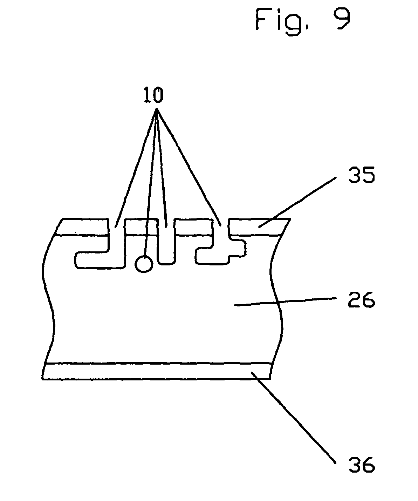

Fig. 9 zeigt schematisch einen Teil der Korpuswandung (26) mit verschiedenen Beispielen von Einsinktiefenbegrenzerlagern (10).

Im Ausführungsbeispiel wird die Abformung des Unterkiefers bei der der Zahnstumpf 48 durch Direktbefüllung, der Zahnstumpf 46 durch Abzweigbefüllung und die Brückenpfeilerzahnstümpfe 34 und 36 durch Reihenbefülung mit Korrekturabformmasse (25) abgeformt werden, beschrieben. Es wird ein Injektionskorrekturabformlöffel (18), bestehend aus dem Korpus (23) und der Profilbodenplatte (27), welche Seitenwandungen (28), eine durchgehende Injektionsrinne (19) mit zwei Injektionsrinneneinlässen (20) und je Schenkel (32) einem distalen Injektionsrinnenauslaß (21) und eine durchgehehnde Ablaufrinne (2) mit zwei Ablaufrinnenauslässen (5) aufweist, verwendet.

Vor der Präparation der Zähne wird mit dem Injektionskorrekturabformlöffel (18) ein Abdruck mit hochvisköser Erstabformmasse (8) über den Unterkiefer genommen. Dafür wird der Korpusinnenraum (24) mit Erstabformmasse befüllt und auch zwischen den Profilbodenplattenseitenwandungen (28) auf dem Rücken der Profilbodenplatte (27) wird Erstabformmasse eingebracht. Im Kopusinnenraum (24) soll die Abformmasse die Einsinktiefenbegrenzer (9) umhüllen und den Raum zwischen den Einsinktiefenbegrenzern und der Profilbodenplatte (27) vollständig ausfüllen. Auch muß die Injektionsrinne (19) und die Ablaufrinne (2) in der Profilbodenplatte vollständig mit Erstabformmasse befüllt sein. Der so befüllt Injektionskorrekturabformlöffel wird nun intraoral auf den Unterkiefer abgesenkt, wobei sich die Zähne und die Kieferstrukturen in die Erstabformmasse (8) einbetten. Die Absinktiefe wird durch die Einsinktiefenbegrenzer begrenzt, wodurch der Kontakt der Zähne mit der Profilbodenplatte verhindert wird und eine ausreichende Schichtstärke von Abformmasse zwischen Zähnen (37) und Bodenfläche der Profilbodenplatte verbleibt. Beim Absenken des Injektionskorrekturabformlöffels (18) soll, geleitet von den Ventilrandformern, Erstabformmasse (8) über die Außenränder der Korpuswandungen (26) hinausquellen und einen Ventilrand bilden, der den Abforminnenraum gegen den Mundraum speicheldicht abdämmt. Nach dem Einsetzen des Abformlöffels werden die Kiefer soweit gegeneinander geschlossen, dass die Gegenkieferzähne sich in die Erstabformmasse (8) auf dem Rücken der Profilbodenplatte einbetten. In dieser Position verharren die Kiefer bis zur Aushärtung der Erstabformmasse. Nach der Aushärtung wird der Abformlöffel intraoral entnommen und die Zahnpräparation durchgeführt.

Zur Vorbereitung der Korrekturabformung wird die Profilbodenplatte (27) vom Korpus (23) getrennt. Jetzt ist die ausgehärtete Erstabformmasse (8) über die gesamte Bodenaussparung (6) frei zugänglich. Ihre Oberfläche ist entsprechend der Textur der Rinnenfläche der Profilbodenplatte strukturiert , d.h. Injektionsrinne (19) und Ablaufrinne (2) haben erhabene Rinnenrippen ausgebildet und der Verlauf der Dichtwülste / Dichtkerben (7) sind als Vertiefungen bzw. Aufwürfe dargestellt.

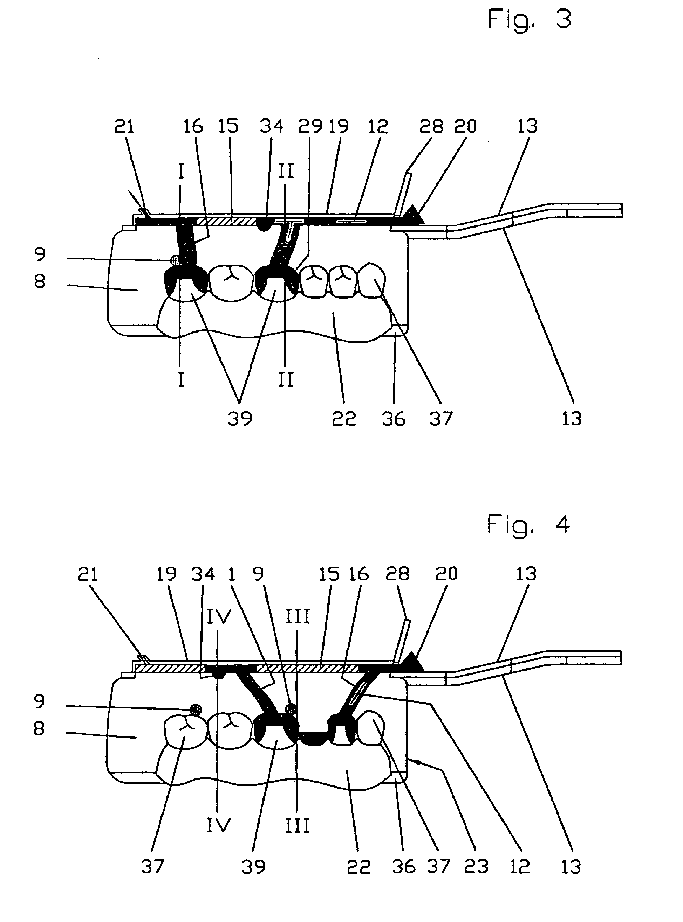

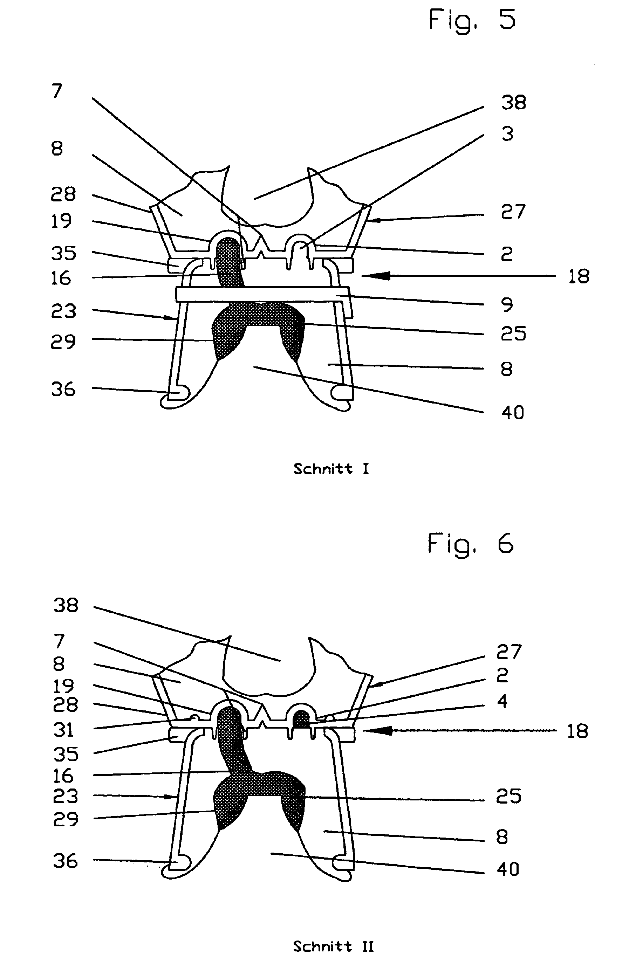

Nun werden die Zuführungs- und die Abführungswege für die Korrekturabformmasse (25) zu den Präparationsräumen (29) in der Erstabformmasse (8) angelegt. Für die Direktbefüllung des Zahnes 48 wird ein Injektionsdurchstich (16) durch die Erstabformmasse (8) (z.B. mit einem entsprechend dimensionierten Hohlmesser) zur Zahnimpression angelegt. Die Injektionsrinnenrippe (15) wird vom Injektionsdurchstich bis zum Injektionsrinnenauslaß (21) entfernt. Auch für die Abzweigbefüllung des Zahnes 46 wird ein Injektionsdurchstich (16) durch die Erstabformmasse (8) zur Zahnimpression angelegt. Dieser Kanal soll in der Injektionsrinnenrippe (15) münden. Diese Rippe wird von dieser Einmündung bis zum nächstgelegenen Injektionsrinneneinlaß (20) entfernt. Weiterhin wird distal des Injektionsdurchstichs (16) ein Verbindungskanal (34) vom Injektionsrinnenkanal (17) zur Ablaufrinnenrippe (3) in der Erstabformmasse angelegt. Von dort wird die Ablaufrinnenrippe (3) bis zum nächstgelegenen Ablaufrinnenauslaß (5) entfernt. Damit sind die Fließwege (12) der Korrekturabformmasse (25) im vierten Quadranten angelegt. Sie sind in Fig. 3, 5 und 6 schematisch dargestellt.

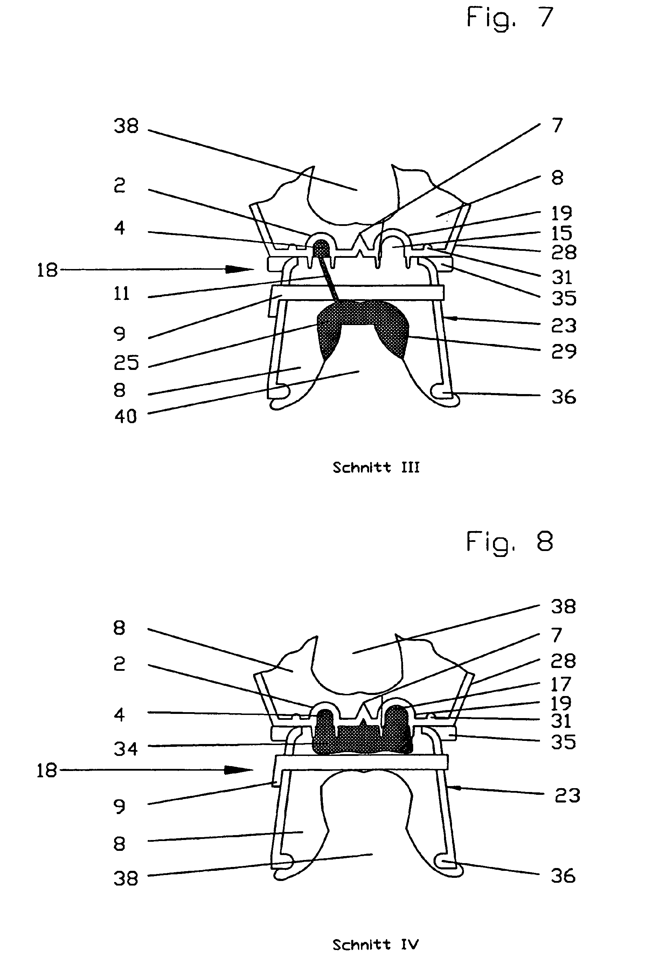

Für die Reihenbefüllung des Präparationsraums (29) um die Zahnstümpfe 34 und 36 wird ein die Injektionsrinnenrippe (15) durchdringender Injektionsdurchstich (16) zur Impression des Zahnes 34 angelegt. Die Injektionsrinnenrippe (15) wird vom Injektionsdurchstich (16) bis zum nächstgelegenen Injektionsrinneneinlaß (20) abgetragen. Zwischen den Zahnimpressionen von 34 und 36 wird ein Verbindungskanal (34) angelegt. Von der Zahnimpression 36 wird ein Ablaufdurchstich (1) zur darüberliegenden Injektionsrinnenrippe (15) geschaffen und diese im Durchstichbereich abgetragen. Von dort wird ein Verbindungskanal (34) zur Ablaufrinnenrippe (3) angelegt und von dort die Ablaufrinnernippe (3) bis zum nächstgelegenen Ablaufrinnenauslaß (5) abgetragen. Damit ist der Fließweg (12) der Korrekturabformmasse (25) für diesen Quadranten angelegt. Er ist schematisch in den Fig. 4, 7 und 8 dargestellt.

An geeigneter Stelle, bevorzugt an den tiefsten Stellen der Zahnimpressionen der präparierten Zähne, werden entsprechend dimensionierte Entlüftungskanäle (11) zum Ablaufrinnenkanal (4) angelegt. Sie dienen zur Entlüftung des Präparationsraumes (29) während der Befüllung mit Korrekturabformmasse(25).

Nach Ausarbeitung der Fließwege (12) wird der Korpus (23) auf den Unterkiefer (22) zurückgesetzt, wobei sich die Zähne (37) und die Kieferstrukturen in die bei der Erstabformung entstandenen Abdruckimpressionen einlagern. Die Abformgebiete werden über die in der Erstabformmasse angelegten Injektionsdurchstiche (16) getrocknet (Luftbläser). Anschließend wird mit einem Applikator die Korrekturabformmasse (25) zur Direktbefüllung des Zahnstumpfes 48 über den Injektionsdurchstich (16) in den Präparationsraum (29) mit Überschuß eingepreßt. Unmittelbar danach wird die Profilbodenplatte (27) mit dem Korpus (23) verbunden, wobei der Überschuß der Korrekturabformmasse über den Injektionsrinnenauslaß (21) abfließt. Bei der Verbindung lagern sich die verbliebenen Teile der Ablaufrinnenrippe (3) und der Injektionsrinnenrippe (15) in die Injektions- (19) bzw. Ablaufrinne (2) der Profilbodenplatte (27) ein. Dort, wo Teile der Rippen entfernt wurden, bilden nun die Wandungen der Rinnen und die Erstabformmasse (8) im basalen Bereich der entfernten Rippen, die Injektionsrinnen- (17), bzw. Ablaufrinnenkanäle (4). Die eingelagerten Dichtwülste/ Dichtkerben (7) bilden eine Sperre gegen Abfließen der Korrekturabformmasse aus den Kanälen.

Die Kiefer werden nun gegeneinander geschlossen, wobei sich die Gegenkieferzähne in die Zahnimpressionen (38) in der Erstabformmasse auf dem Rücken der Profilbodenplatte (27) einlagern. Durch dosierten Bissdruck wird die Löffellage auf dem Unterkiefer (22) fixiert. Die Korrekturabformmasse (25) wird nun über den jeweiligen Injektionsrinneneinlaß (20) mit entsprechend dosiertem Druck in den jeweiligen Injektionsrinnenkanal (17) eingepresst.

Bei der Abzweigbefüllung fließt sie über den in der Erstabformmasse (8) angelegten Fließweg (12) zum Zahnstumpf 46. Der Schwerkraft folgend füllt sie den Präparationsraum (29) aus. Die nachgepreßte, überschüssige Korrekturabformmasse (25) fließt über den in der Erstabformmase (8) angelegten Verbindungskanal (34) zum Ablaufrinnenkanal (4) und von dort zum Ablaufrinnenauslaß (5), wo sie den Injektionskorrekturabformiöffel (18) verlässt.

Bei der Reihenbefüllung fließt die Korrekturabformmasse (25) über den Fließweg (12) zum Zahnstumpf 34 und über den angelegten Verbindungskanal (34) zum Zahnstumpf 36. Durch den Ablaufdurchstich (1) wird sie über den distalen Injektionsrinnenkanal zu dem angelegten Verbindungskanal (34) zum Ablaufrinnenkanal (4) geleitet, über den sie den Korrektwabformlöffel durch den Ablaufrinnenauslaß (5) verlässt. Durch die in der Erstabformmasse angelegten Entlüftungskanäle (11) wird persistierende Luft und Flüssigkeitsreste von der ansteigenden Korrekturabformmasse aus dem Präparationsraum (29) in den Ablaufrinnenkanal (4) verdrängt, wodurch eine blasenfreie Abformung gewährleistet wird

Zur Optimierung der Fließ- und Abformeigenschaften kann vor, bzw. während der Befüllung mit Korrekturabformmasse (25) im jeweiligen Präparationsraum (29) ein Unterdruck erzeugt werden. Dies geschieht durch Anschluß eines Unterdruckerzeugers (z.B. Speichelabsauger) am jeweiligen Ablaufrinnenauslaß (5) bei gleichzeitigen luftdichtem Verschluß des Injektionsrinneneinlasses (20) mit dem Korrekturabformmassen- applikator.

Nach Aushärtung der Korrekturabformmasse wird der Injektionskorrekturabformlöffel (18) intraoral entnommen und mit ihm die Arbeitsmodelle auf herkömmliche Art und Weise hergestellt.

### BEZUGSZEICHENLISTE

- 1: Ablaufdurchstich
- 2: Ablaufrinne
- 3: Ablaufrinnenrippe
- 4: Ablaufrinnenkanal
- 5: Ablaufrinnenauslaß
- 6: Bodenaussparung
- 7: Dichtwülste/ Dichtkerben
- 8: Erstabformmasse
- 9: Einsinktiefenbegrenzer
- 10: Einsinktiefenbegrenzerlager
- 11: Entlüftungskanal
- 12: Fließweg
- 13: Griff
- 14: Halte-/ und Stützvorrichtungen
- 15: Injektionsrinnenrippe
- 16: Injektionsdurchstich
- 17: Injektionsrinnenkanal
- 18: Injektionskorrekturabformlöffel
- 19: Injektionsrinne
- 20: Injektionsrinneneinlaß
- 21: Injektionsrinnenauslaß
- 22: Kiefer
- 23: Korpus
- 24: Korpusinnenraum
- 25: Korrekturabformmasse
- 26: Korpuswandung
- 27: Profilbodenplatte
- 28: Profilbodenplattenseitenwandung
- 29: Präparationsraum
- 30: Rinnendurchwölbung
- 31: Retentionsstrukturen
- 32: Schenkel
- 33: Trennhilfestrukturen
- 34: Verbindungskanal
- 35: Versteifungsrahmung
- 36: Ventilrandformer
- 37: Zahn
- 38: Zahnimpression
- 39: Zahnstumpf
- 40: Zahnstumpfimpressionen

## Patentansprüche

1. Vorrichtung zur Injektionskorrekturabformung, bestehend aus einem Injektionskorrekturabformlöffel (18), bestehend aus einem Korpus (23), der Korpuswandungen (26), einen Griff (13), eine Versteifungsrahmung (35), Ventilrandformer (36), Einsinktiefenbegrenzer (9), Einsinktiefenbegrenzerlager (10), Halte- und Stützvorrichtungen (14) und eine Bodenaussparung (6) aufweist, und einer Profilbodenplatte (27), die reversibel mit dem Korpus zusammenfügbar ist, wobei sie die Bodenaussparung (6) des Korpus verschließt, und einen Griff (13), Halte- und Stützvorrichtungen (14) aufweist, **dadurch gekennzeichnet, dass** die Profilbodenplatte Retentionsstrukturen (31), Dichtwülste/Dichtkerben (7), Einlassadapter, Auslassadapter, Profilbodenplattenseitenwandungen (28) und mindestens eine Injektionsrinne (19) mit mindestens einem Injektionsrinneneinlass (20) aufweist, wobei die Injektionsrinne (19) bei der Verwendung der Vorrichtung eine Injektionsrinnenrippe (15) in einer Erstabformmasse (8) ausformt, und nach deren Entfernung ein Injektionsrinnenkanal (17) entsteht, welcher von der Injektionsrinne (19) und der sich unter der entfernten Injektionsrinnenrippe (15) befindenden Erstabformmasse gebildet wird, durch den die Korrekturabformmasse (25) geleitet wird.

2. Vorrichtung nach Anspruch 1, **dadurch gekennzeichnet, dass** die Profilbodenplatte (27) mindestens eine Ablaufrinne (2) aufweist.

3. Vorrichtung nach Anspruch 1 oder 2, **dadurch gekennzeichnet, dass** die Injektionsrinne (19) mindestens einen Injektionsrinnenauslass (21) aufweist.

4. Vorrichtung nach Anspruch 1, **dadurch gekennzeichnet, dass** die Profilbodenplatte (27) mindestens eine Ablaufrinne (2) mit mindestens einem Ablaufrinnenauslass aufweist, die bei der Verwendung der Vorrichtung eine Ablaufrinnenrippe (3) in einer Erstabformmasse (8) ausformt und durch deren Entfernung ein Ablaufrinnenkanal (4), gebildet durch die Ablaufrinne (2) und der sich unter der entfernten Ablaufrinnenrippe befindenden Erstabformmasse entsteht, durch den überschüssige Korrekturabformmasse (25) abgeleitet wird.

5. Vorrichtung nach Anspruch 1, **dadurch gekennzeichnet, dass** der Korpus (23) zur Versteifung eine angelegte Versteifungsrahmung (35), wie auch Ausformungen und Falzungen der Korpuswandungen (26) aufweist.

6. Vorrichtung nach Anspruch 1, **dadurch gekennzeichnet, dass** der Korpus (23) und die Profilbodenplatte (27) zu ihrer reversiblen Verbindung Halte- und Stützvorrichtungen (14) aufweisen.

7. Vorrichtung nach Anspruch 1, **dadurch gekennzeichnet, dass** die Korpuswandungsränder zur Ausformung eines Ventilrandes Ventilrandformer (36) aufweisen.

8. Vorrichtung nach Anspruch 1, **dadurch gekennzeichnet, dass** die Einsinktiefenbegrenzer (9) immobil sind und sich an einer definierten Position der Korpuswandungen (26) befinden.

9. Vorrichtung nach Anspruch 1, **dadurch gekennzeichnet, dass** die Korpuswandungen (26) Einsinktiefenbegrenzerlager (10) zur lagestabilen Aufnahme von mobilen Einsinktiefenbegrenzer (9) aufweisen.

10. Vorrichtung nach Anspruch 1, **dadurch gekennzeichnet, dass** der Griff (13) des Korpus (23) und der Griff (13) der Profilbodenplatte (27) nach anatomischen und ergonomischen Erfordernissen sinnvoll ausgeformt und zueinander adaptierbar sind und Trennhilfestrukturen (33) zur leichteren Lösung voneinander aufweisen.

11. Vorrichtung nach Anspruch 4, **dadurch gekennzeichnet, dass** die Profilbodenplatte (27) Dichtwülstel Dichtkerben (7) aufweist, die die Injektionsrinnenkanäle (17) und die Ablaufrinnenkanäle (4) abdichten.

12. Vorrichtung nach Anspruch 1, **dadurch gekennzeichnet, dass** die Profilbodenplatte (27) Retentionstrukturen (31) aufweist, die eine Masse zur Einlagerung der Gegenkieferzähne auf der Rückenseite der Profilbodenplatte (27) retentiv fixieren.

13. Vorrichtung nach Anspruch 1, **dadurch gekennzeichnet, dass** die Profilbodenplatte (27) Seitenwandungen (28) aufweist, die der Schaffung eines Aufnahmeraumes für Abformmassen dienen, wobei die Seitenwandungen (28) integraler Bestandteil der Profilbodenplatte (27) sind oder als eigenständige Vorrichtungen mit der Profilbodenplatte reversibel verbindbar sind.

14. Vorrichtung nach Anspruch 4 **dadurch gekennzeichnet, dass** der Injektionsrinneneinlass (20) und der Ablaufrinnenauslass (5) einen geeigneten Einlassadapter bzw. Auslassadapter zum Ansetzen eines Applikators zum Applizieren von Korrekturabformmasse bzw. zum Anschließen eines Unterdruckerzeugers, wie einem Speichelsauger, aufweist.

15. Vorrichtung nach Anspruch 4, **dadurch gekennzeichnet, dass** Verschlussstopfen die zugehörigen Einlass- und Auslassöffnungen, bzw. Einlass- und Auslassadapter einzeln, oder als Verbund verschließen und damit das Eindringen von Erstabformmasse (8) während der Erstabformung in diese Öffnungen verhindern.

## Claims

1. Apparatus for injection correction impression, comprising an injection correction impression tray (18), comprising a body (23), which has body walls (26), a handle (13), a stiffening frame (35), valve rim formers (36), sinking depth limiters (9), sinking depth limiter bearings (10), holding and supporting devices (14) and a bottom clearance (6), and comprising a profile bottom plate (27), which can be reversibly joined together with the body, wherein it closes the bottom clearance (6) in the body, and has a handle (13) and holding and supporting devices (14), **characterized in that** the profile bottom plate has retention structures (31), sealing beads/sealing notches (7), inlet adapters, outlet adapters, profile bottom plate side walls (28) and at least one injection channel (19) with at least one injection channel inlet (20), wherein, when the apparatus is used, the injection channel (19) forms an injection channel rib (15) in a first impression material (8), and after the removal thereof an injection channel duct (17) is produced, formed by the injection channel (19) and the first impression material located under the removed injection channel rib (15), through which duct the correction impression material (25) is made to pass.

2. Apparatus according to Claim 1, **characterized in that** the profile bottom plate (27) has at least one drainage channel (2).

3. Apparatus according to Claim 1 or 2, **characterized in that** the injection channel (19) has at least one injection channel outlet (21).

4. Apparatus according to Claim 1, **characterized in that** the profile bottom plate (27) has at least one drainage channel (2) with at least one drainage channel outlet which, when the apparatus is used, forms a drainage channel rib (3) in a first impression material (8) and the removal thereof has the effect of producing a drainage channel duct (4), formed by the drainage channel (2) and the first impression material located under the removed drainage channel rib, through which duct surplus correction impression material (25) is drained away.

5. Apparatus according to Claim 1, **characterized in that**, for stiffening, the body (23) has an applied stiffening frame (35), and also formations and foldings of the body walls (26).

6. Apparatus according to Claim 1, **characterized in that**, for their reversible connection, the body (23) and the profile bottom plate (27) have holding and supporting devices (14).

7. Apparatus according to Claim 1, **characterized in that** the peripheries of the body walls have valve rim formers (36) for the forming of a valve rim.

8. Apparatus according to Claim 1, **characterized in that** the sinking depth limiters (9) are immobile and are located at a defined position on the body walls (26).

9. Apparatus according to Claim 1, **characterized in that** the body walls (26) have sinking depth limiter bearings (10) for the positionally stable reception of mobile sinking depth limiters (9).

10. Apparatus according to Claim 1, **characterized in that** the handle (13) of the body (23) and the handle (13) of the profile bottom plate (27) are purposefully formed according to anatomical and ergonomic requirements and can be adapted to each other and have separation aiding structures (33) for easier release from each other.

11. Apparatus according to Claim 4, **characterized in that** the profile bottom plate (27) has sealing beads/sealing notches (7), which seal the injection channel ducts (17) and the drainage channel ducts (4).

12. Apparatus according to Claim 1, **characterized in that** the profile bottom plate (27) has retention structures (31), which retentively fix a material for incorporating the teeth of the opposing jaw on the rear side of the profile bottom plate (27).

13. Apparatus according to Claim 1, **characterized in that** the profile bottom plate (27) has side walls (28), which serve for creating a receiving space for impression materials, wherein the side walls (28) are an integral component part of the profile bottom plate (27) or can be reversibly connected to the profile bottom plate as independent devices.

14. Apparatus according to Claim 4, **characterized in that** the injection channel inlet (20) and the drainage channel outlet (5) have a suitable inlet adapter and outlet adapter for placing in position an applicator for applying correction impression material or for connecting a vacuum generator such as a saliva ejector.

15. Apparatus according to Claim 4, **characterized in that** closure plugs close the associated inlet and outlet openings, or inlet and outlet adapters, individually or as a unit, and consequently prevent the penetration of first impression material (8) into these openings during the forming of the first impression.

## Revendications

1. Dispositif de moulage à correction d'injection, consistant en une cuillère de moulage à correction d'injection (18), composée d'un corps (23) qui présente des parois de corps (26), un manche (13), un encadrement de renfort (35), des modeleurs de bord de soupape (36), des limiteurs de profondeur d'enfoncement (9), des paliers de limiteurs de profondeur d'enfoncement (10), des dispositifs de retenue et d'appui (14) et une échancrure de fond (6), et en une plaque de fond profilée (27) qui peut être assemblée de manière réversible au corps, dans lequel la plaque de fond profilée ferme l'échancrure de fond (6) du corps et présente un manche (13), des dispositifs de retenue et d'appui (14), **caractérisé en ce que** la plaque de fond profilée présente des structures de rétention (31), des bourrelets d'étanchéité/entailles d'étanchéité (7), des adaptateurs d'admission, des adaptateurs de sortie, des parois latérales de la plaque profilée de fond (28) et au moins une rigole d'injection (19) dotée d'au moins une admission de rigole d'injection (20), la rigole d'injection (19) formant lors de l'utilisation du dispositif une nervure de rigole d'injection (15) dans une masse de moulage initiale (8) et un canal de rigole d'injection (17) apparaissant après son enlèvement, lequel canal est constitué par la rigole d'injection (19) et la masse de moulage initiale se trouvant en dessous de la nervure de rigole d'injection enlevée (15) à travers laquelle la masse de moulage de correction (25) est conduite.

2. Dispositif selon la revendication 1, **caractérisé en ce que** la plaque de fond profilée (27) présente au moins une rigole d'évacuation (2).

3. Dispositif selon la revendication 1 ou 2, **caractérisé en ce que** la rigole d'injection (19) présente au moins une sortie de rigole d'injection (21).

4. Dispositif selon la revendication 1, **caractérisé en ce que** la plaque profilée de fond (27) présente au moins une rigole d'évacuation (2) comportant au moins une sortie de rigole d'évacuation qui, lors de l'utilisation du dispositif, forme une nervure de rigole d'évacuation (3) dans une masse de moulage initiale (8) et, quand on enlève cette rigole, un canal de rigole d'évacuation (4), formé par la rigole d'évacuation (2) et la masse de moulage initiale se trouvant en dessous de la nervure de rigole d'évacuation enlevée, se produit, et la masse de moulage de correction excédentaire (25) est deviée à travers ce canal.

5. Dispositif selon la revendication 1, **caractérisé en ce que** le corps (23) présente pour le renforcer un encadrement de renfort (35) posé dessus ainsi que des modelages et des plis des parois du corps (26).

6. Dispositif selon la revendication 1, **caractérisé en ce que** le corps (23) et la plaque de fond profilée (27) présentent des dispositifs de retenue et d'appui (14) pour les raccorder de manière réversible.

7. Dispositif selon la revendication 1, **caractérisé en ce que** les bords des parois du corps présentent des modeleurs de bord de soupape (36) pour modeler un bord de soupape.

8. Dispositif selon la revendication 1, **caractérisé en ce que** les limiteurs de profondeur d'enfoncement (9) sont immobiles et se trouvent à une position définie des parois du corps (26).

9. Dispositif selon la revendication 1, **caractérisé en ce que** les parois du corps (26) présentent des paliers de limiteurs de profondeur d'enfoncement (10) destinés à recevoir avec stabilité des limiteurs de profondeur d'enfoncement mobiles (9).

10. Dispositif selon la revendication 1, **caractérisé en ce que** le manche (13) du corps (23) et le manche (13) de la plaque de fond profilée (27) sont modelés rationnellement suivant des prescriptions anatomiques et ergonomiques et adaptables l'un à l'autre et présentent des structures auxiliaires de séparation (33) pour les détacher plus facilement l'un de l'autre.

11. Dispositif selon la revendication 4, **caractérisé en ce que** la plaque de fond profilée (27) présente des bourrelets d'étanchéité/entailles d'étanchéité (7) qui étanchéifient les canaux de la rigole d'injection (17) et les canaux de la rigole d'évacuation (4).

12. Dispositif selon la revendication 1, **caractérisé en ce que** la plaque de fond profilée (27) présente des structures de rétention (31) qui fixent en la retenant une masse destinée à loger les dents du maxillaire conjugué sur la face arrière de la plaque de fond profilée (27).

13. Dispositif selon la revendication 1, **caractérisé en ce que** la plaque de fond profilée (27) présente des parois latérales (28) qui servent à créer un espace de réception pour les masses de moulage, les parois latérales (28) faisant partie intégrante de la plaque de fond profilée (27) ou pouvant être raccordées de manière réversible en tant que dispositifs autonomes à la plaque de fond profilée.

14. Dispositif selon la revendication 4, **caractérisé en ce que** l'admission de la rigole d'injection (20) et la sortie de la rigole d'évacuation (5) présentent un adaptateur d'admission ou un adaptateur de sortie approprié destiné à poser un applicateur servant à appliquer de la masse de moulage de correction ou à raccorder un générateur de dépression tel qu'un aspirateur de salive.

15. Dispositif selon la revendication 4, **caractérisé en ce que** des bouchons obturateurs ferment les orifices correspondants d'admission et de sortie ou les adaptateurs d'admission et de sortie individuellement ou en tant qu'ensemble et empêchent ainsi la pénétration de masse de moulage initiale (8) dans ces orifices pendant le moulage initial.
